# EUROPEAN PATENT SPECIFICATION

(11) **EP 3 221 523 B1**
(45) Date of publication and mention of the grant of the patent: **05.08.2020**
(21) Application number: 15861649.0
(22) Date of filing: 16.11.2015
(51) Int. Cl.: B01D 21/02, B65D 88/74, B65D 88/76, B65D 30/02, E03C 1/266, E03F 5/14, E03F 5/16, B65D 90/10, B65D 90/00, B65D 90/02, E03C 1/00, B01D 21/00

(54) **SEPARATION ARRANGEMENT FOR THE SEPARATION OF FOOD WASTE FROM WATER**
ABSCHEIDUNGSANORDNUNG ZUM ABSCHEIDEN VON SPEISERESTEN AUS WASSER
AGENCEMENT DE SÉPARATION POUR SÉPARER LES DÉCHETS ALIMENTAIRES DE L'EAU

(30) Priority: 19.11.2014 SE 1451391
(43) Date of publication of application: 27.09.2017
(73) Proprietor: Rensa Entreprenad Sverige AB, 187 12 Täby (SE)
(72) Inventor: JANSSON, Mikael, S-185 94 Vaxholm (SE)
(74) Representative: Noréns Patentbyrå AB
(86) International application number: PCT/SE2015/051226
(87) International publication number: WO 2016/080891

(56) References cited:
- WO-A1-2013/158025
- DE-A1- 2 707 872
- GB-A- 2 466 698
- JP-A- 2005 273 270
- KR-B1- 101 388 560
- US-A- 5 667 689
- US-B1- 6 358 411
- 'Rapport B2009:04 Utvärdering av funktion på slam- och fettavskiljare Star Bowling' 2009, GÖTEBORG, XP055445576 ISSN: 1103-4092 Retrieved from the Internet: <URL:http://www.If- mola.se/pdf/2009/Rapport_B200904_Utvarderin g_av_funktion _pa_slam_och_fettavskiljare_Avfall_Sverige_ 2009.pdf>

## Description

The present invention relates to an arrangement for the separation of food waste and fat from water during processing in dish-washing installations, in particular in restaurants and industrial kitchens.

It is an environmental objective that at least 35% of food waste from households and premises that handle food is to be recovered through biological treatment. Currently, most collection of food waste takes place from restaurants in vessels or sacks that are subsequently transported to pretreatment facilities, and onwards to biogas production. In cases in which the restaurants are not participants in the collection system, the mixed waste is sent to combustion. As a supplement to the collection of food waste, permission has been granted at least in some locations for individual households to install food waste mills connected directly to the waste-water system, which is a simple way to treat food waste and one that does not require vehicular transport. There is a demand from industrial kitchens and restaurants to use food waste mills, not only to avoid the heavy lifting of sacks that are to be carried or transported to waste-storage rooms (which in turn must be kept clean in order to avoid offensive smells), but also to be able to use an efficient and environmentally sensitive method of treating food waste. Municipal waste-treatment plants are major producers of biogas used as fuel for vehicles and an addition of organic material from this type of food waste would be able to contribute to increasing the production of biogas.

It is, as has been mentioned above, permitted in certain locations to connect a food waste mill to the municipal waste-water network, but in the case of the treatment of food waste from restaurants and industrial kitchens, it is often considered that the volumes would be so concentrated that the existing waste-water networks would not be able to cope with such an increased mixing in of food waste. This would lead to far too high levels of suspended food waste and fat in the waste water for the existing waste-water networks and waste-treatment plants to be able to cope with. It has, therefore, been suggested that it should be possible for the waste to be collected in closed tanks, such that it can be transported with slurry tankers. The problem, however, is that it is a case of such large volumes of water with mixed-in food waste that it would not be economically defensible with removal in this manner.

A system for the handling of food waste in association with dish-washing installations has previously been presented by the applicant who is submitting the present application, and a patent for the solution has been issued in Sweden with number 1250383-5, publication number SE 536 422 C2. Documents GB2466698A; US5,667,689; US6,358,411B1 and DE2707872A1 disclose further waste water treatment arrangements.

One purpose of the present invention, therefore, is to propose a separation arrangement for the treatment of food waste in connection with dish-washing installations in restaurants, industrial kitchens and the food industry, where the main principles of the patent referred to above are used.

The above-mentioned purpose is achieved with a separation arrangement according to claim 1.

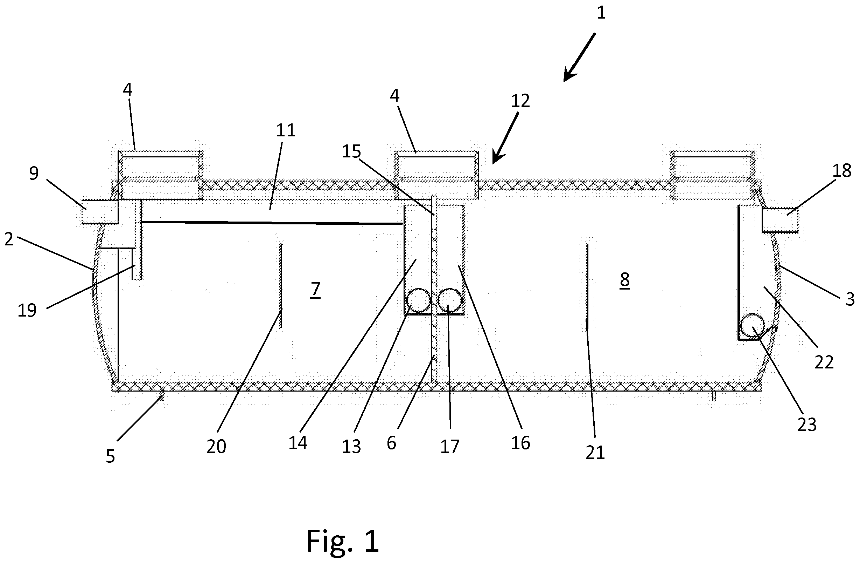

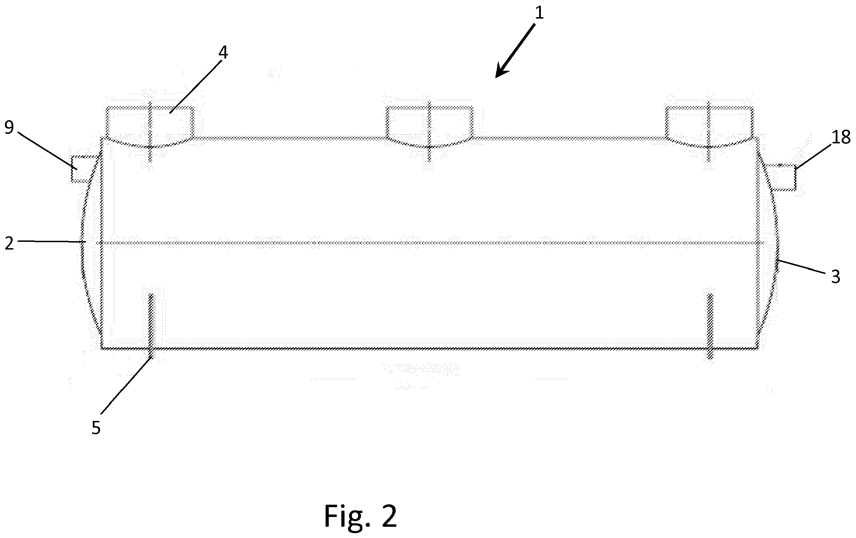

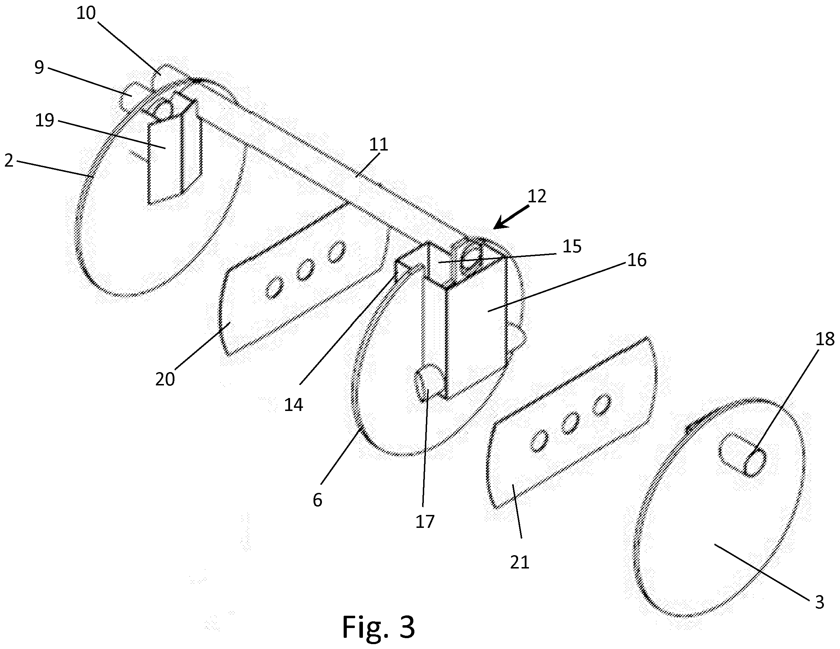

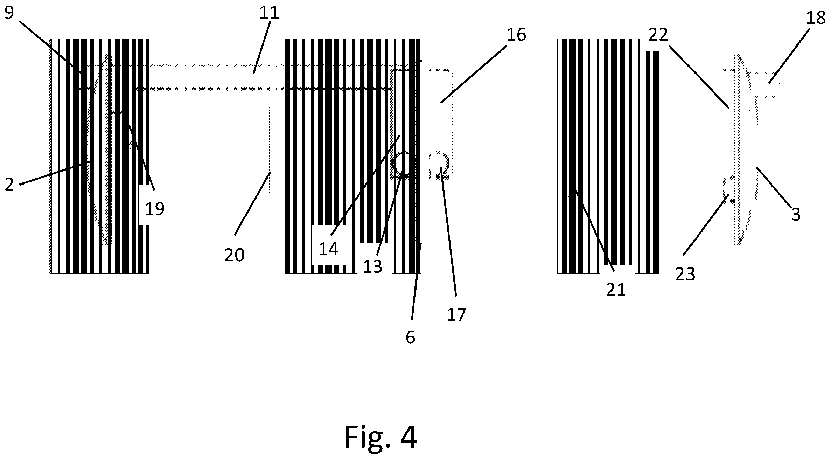

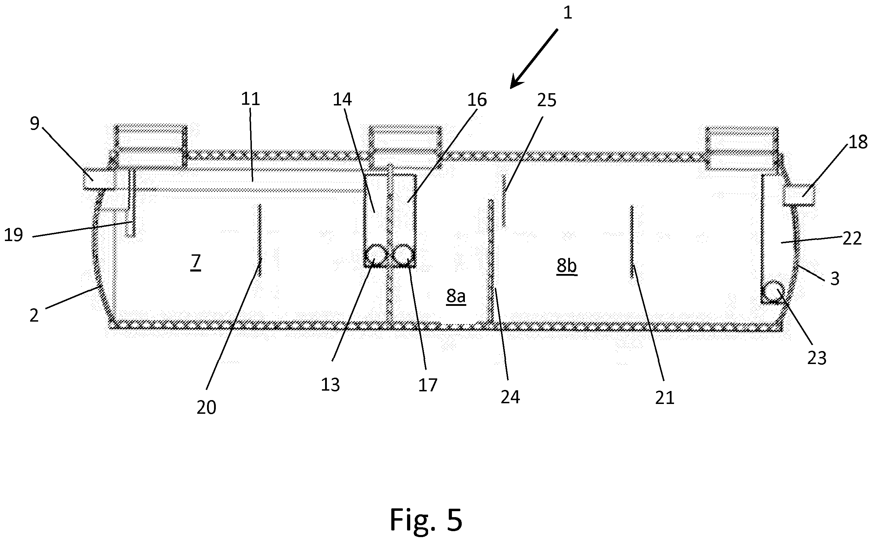

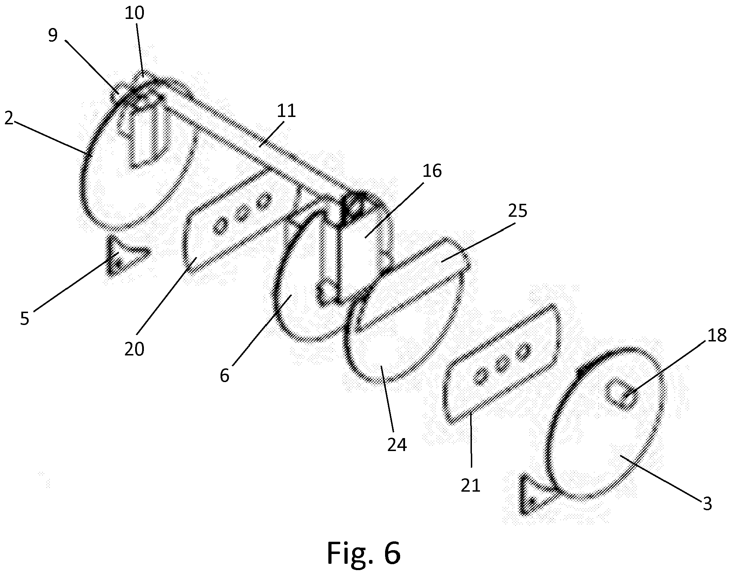

The invention will now be described in more detail in the form of a non-limiting embodiment that is illustrated with the aid of the attached drawings, where **Figure 1** shows a schematic longitudinal sectional view through a food-waste tank with a separation arrangement according to the invention. **Figure 2** shows a side view of the food-waste tank. **Figure 3** shows a schematic perspective view of the separation arrangement according to the invention, but with the exclusion of the surrounding tank, and **Figure 4** shows a corresponding side view of the separation arrangement with the exclusion of the surrounding tank. **Figure 5** shows a schematic longitudinal sectional view of a food-waste tank corresponding to Figure 1, but where the second chamber is divided into two parts, and **Figure 6** shows a corresponding schematic perspective view of the separation arrangement for the food-waste tank in Figure 5.

Thus, Figure 1 shows a longitudinal sectional view of a food-waste tank 1 with a separation arrangement according to the invention integrated into the tank, and Figure 2 shows a corresponding side view of the tank 1. The tank itself is constructed from a double-walled polyethylene pipe with reinforcements between the two walls. The pipe is in principle of the same type as that used for large road culverts, and is intended to be able to withstand heavy loads. This means that if the tank is buried in the ground, it is not necessary to cast a pressure-reducing slab over the tank, and, in the same way, if the tank is standing free it has sufficient integral rigidity and integral strength that it does not collapse on being filled with, for example, liquid contents.

The tank 1 is equipped at both of its ends with end walls 2, 3, and is equipped at its upper surface with towers 4, through which a slurry extraction pipe, for example, can be passed down into the tank in order to empty it of its contents. In the case in which the tank 1 is mounted above ground or on a floor surface, the tank rests on supports 5. A separating wall 6 is arranged inside the tank that divides the interior of the tank 1 into a first chamber 7 and a second chamber 8.

Two inlets are arranged in what is the left end wall 2 in the drawing: a first inlet 9 and a second inlet 10. The first inlet 9 opens out into the first chamber 7 and is connected to a pipe that leads food waste into the first chamber. The pipe that leads food waste into the chamber may be connected to, for example, a food waste mill, and in this case supplies the food waste in a state in which it has been divided into pieces, together with water. The second inlet 10 comes from an outlet for dish-washing water and supplies dish-washing water without a significant amount of food waste, although a certain amount of slurry may be present in this dish-washing water. The second inlet 10 is connected inside the first chamber to a pipe 11 that passes directly through the first chamber 7 and the separating wall 6, and then opens out into the second chamber 8. The two inlets 9, 10 are located close to the top of the tank, such that the inflowing food waste and dish-washing water enter at the top of the relevant chamber 7 or 8.

A connection 12 from the first chamber 7 to the second chamber 8 is arranged at the separating wall 6 between the two chambers 7, 8. This connection 12 is designed such that it has an inlet 13 inside the first chamber 7, which inlet is located at approximately the vertical centre of the tank. The connection 12 may be designed as a closed box 14 that is against the separating wall 6, which box extends from the inlet 13 up to upper part of the tank where the separating wall 6 demonstrates a cavity 15 that allows connection into the second chamber 8. The box 14 and the cavity 15 together form a connecting passage from the first chamber 7 to the second chamber 8. A corresponding second box 16 is arranged in the second chamber 8, into which second box the cavity 15 in the separating wall 6 opens out, and this second box 16 extends inside the second chamber 8 downwards along the separating wall 6 in order to terminate at approximately half of the height of the tank with two outlet pipes 17 directed essentially horizontally outwards towards the sides of the tank. Also the pipe 11 that is connected to the second inlet 10 and that leads dish-washing water into the second chamber 8 of the tank 1 opens out inside the upper part of the second box 16. The second box 16 extends sufficiently far upwards in the tank that incoming water does not run out over the upper edge of the box, but is forced down and out through the outlet pipes 17, which are thus arranged at the approximate centre of the tank and direct the current of water that flows out from the box towards the sides of the tank. Laminar flow of the water towards the outlet 18 that is arranged in the end wall 3 at the second end of the second chamber 8 is in this way prevented. The pipe 11 that leads dish-washing water into the second chamber opens out into the second box 16 next to the cavity 15 that allows water from the first chamber 7 to flow onwards into the second tank, and thus the water that flows over from the first chamber is mixed in the second box with dish-washing water that enters through the inlet pipe 11.

Also a screen 19 is arranged at the inlet 9 in the first chamber 7, which screen guides the incoming food waste mixed with a certain amount of water outwards towards the sides of the tank in order to prevent laminar flow through the tank.

It is appropriate that also damping plates 20, 21 be arranged in the two chambers 7, 8, centrally in both the longitudinal and vertical directions in the tank and extending transversely across the longitudinal direction of the tank. These damping plates 20, 21 cover solely a part of the height of the tank, but it is appropriate that they cover its complete internal width, such that they permit the flow of water both under and over the plates, while at the same time also preventing laminar flow through the chambers 7, 8. The damping plates can preferably be equipped with penetrating holes in order to allow a certain flow of water through the plates, but at the same time damping any laminar flow that arises.

An outlet 18 for water that can be led onwards to, for example, a municipal waste-water network is thus arranged in the outlet end wall 3 of the tank 1, at the end of the second chamber 8. Also the outlet 18 is preferably designed such that it is connected inside the second chamber of the tank with an inlet box 22 that extends from the outlet 18 downwards to a region that is vertically at the centre of the second chamber 8, or somewhat lower than this, and is appropriately equipped with inlet pipes 23 that are directed horizontally outwards towards the edges of the tank.

Through the design of the separation arrangement in the manner that is described above, the food waste that enters the first chamber 7 is brought by the screen 19 outwards towards the sides of the chamber 7. Due to the effects of gravity, the food waste in the first chamber 7 will be divided up such that heavier parts of the food waste sink towards the bottom of the tank 1, with parts of the food waste that are less dense than water floating up towards the top of the tank, above the water, which will thus be located at the vertical centre of the tank. The damping plate 20 prevents a laminar flow of food waste through the tank, and in this way facilitates the division of the food waste that has been described. The water that is located in the central region of the tank will flow in through the inlet 13 to the box 14 and will rise inside this such that it will subsequently, at the cavity 15 in the upper part of the separating wall 6, flow over and into the second box 16 in the second chamber 8. At this location in the second box 16, the overflowing water from the first chamber is mixed with the dish-washing water that is flowing in through the inlet pipe 11, and down through the second box and out through the outlet pipes 17 and will be directed by these outwards towards the edges of the second chamber 8 in the tank. The second chamber 8 is principally a fat separator, but also a certain amount of slurry will accompany the flow into the second chamber. For this reason, also in the second chamber a division of the incoming water takes place, such that slurry is sedimented towards the bottom of the chamber while fat floats on top of the water. A damping plate is arranged also in the second chamber in order to prevent laminar flow of the incoming water towards the outlet. Also the cleanest fraction of the water in the second chamber 8 is located at the vertical centre of the tank, for which reason the inlet pipes 23 to the inlet box 22 are located approximately vertically centrally in the end wall 3, or somewhat below the centre, such that the cleanest water is to be led onwards towards the outlet 18 and onwards to a waste-water treatment network.

According to a second embodiment of the invention, the separation arrangement is designed such that the second chamber is divided into two sections where one follows the other, as is illustrated in Figures 5 and 6. The food-waste tank and the separation arrangement are designed, with respect to the complete first chamber 7 and up to and including the inlet to the second chamber 8, as also the outlet 18 from the second chamber 8, in the same manner as described above with reference to Figures 1-4. What differs in this embodiment is thus that the second chamber 8 is divided into two sections 8a, 8b through a second separating wall 24 having been arranged in the second chamber 8 at a distance from the separating wall 6 that separates the two chambers 7 and 8. The second separating wall 24 extends upwards from the bottom of the tank to the vicinity of the top of the tank, while leaving free an overflow space in the upper part of tank such that the water can flow onwards into the second section 8b. There is created in this way a further slurry trap in the first section 8a of the second chamber 8, such that most of the slurry that enters the second chamber can be separated as early as in the first section, and the water that flows onwards into the second section 8b has a significantly lower content of slurry. It is appropriate that also a screening wall 25 that extends downwards a certain distance from the top of the tank in order to force the overflowing water to flow downwards in the tank be arranged just after the second separating wall 24 in the direction of flow. An even better separation of slurry and fat from the water is obtained with a separation arrangement designed in this manner, and the water flowing from the tank 1 out through the outlet 18 contains even lower levels of contaminants.

It is obvious that a separation arrangement as described above can be designed with different dimensions in order to be suitable for different local requirements and available spaces.

Through the dish-washing water from the kitchen or dish-washing room not being mixed with food waste, which contains considerably more solid material, the separation and cleaning of the water will be more efficient, and the flow through the food-waste tank will be calmer and more efficient when no chemicals nor large amounts of hot water pass through it.

It is obvious also that other materials than those specified in the description above can be used, without deviating from the innovative concept of the invention.

With a separation arrangement according to the invention, it is possible to achieve a system with very low vertical fall through the complete separation arrangement and food-waste tank.

## Claims

1. A separation arrangement integrated into a tank (1) with at least two chambers (7, 8) located one after the other and separated by a separating wall (6), and comprising a first inlet (9) into the tank for food waste mixed with water and a second inlet (10, 11) into the tank, wherein the first inlet (9) opens out into a first (7) of the at least two chambers and wherein a second chamber (8) is provided with an outlet (18), **characterised in that** the second inlet (10, 11) for dish washing water without food waste, opens out into the second (8) of the at least two chambers, and **in that** a connection (12) is arranged in order to allow water separated from the food waste in the first chamber (7) to flow onwards into the second chamber (8) and to be mixed with dish-washing water, and **in that** the second chamber (8) is arranged to separate fat from water and wherein the outlet (18) is for water separated from fat.

2. The separation arrangement according to claim 1, **characterised in that** the two inlets (9, 10) are arranged in a common end wall (2) at one end of tank (1), and that the second inlet (10) for dish-washing water is connected to a pipe (11) that passes through the first chamber (7) and does not open out until it is in the second chamber (8).

3. The separation arrangement according to claim 2, **characterised in that** the first inlet (9) is arranged essentially centrally in an upper part of the first chamber (7) in the tank (1), and that there is arranged inside the first chamber (7) a screen arrangement (19) that guides the incoming food waste and the water principally horizontally outwards towards the sides of the inner surface of the tank (1).

4. The separation arrangement according to any one of the preceding claims, **characterised in that** the second inlet (10) is arranged essentially centrally in an upper part of the second chamber (8) in the tank and that there is arranged inside the second chamber (8) a screen arrangement (16, 17) that guides the incoming dish-washing water principally horizontally outwards towards the sides of the inner surface of the tank (1).

5. The separation arrangement according to claim 4, **characterised in that** the connection (12) from the first chamber to the second chamber comprises a connecting passage (14, 15) arranged to open out essentially centrally in the upper part of the second chamber (8) next to the inlet (11) for dish-washing water, and that the screen arrangement (16, 17) is arranged to guide the incoming dish-washing water and the flow from the connecting passage essentially horizontally outwards towards the sides of the inner surface of the tank (1).

6. The separation arrangement according to claim 5, **characterised in that** the connecting passage (14) has its inlet (13) in the first chamber (7) at the tank arranged essentially in the vertical centre of the tank (1).

7. The separation arrangement according to any one of the preceding claims, **characterised in that** a damping plate (20, 21) is arranged in each chamber (7, 8) centrally in both the vertical and longitudinal directions in the relevant chamber (7, 8), covering only a part of the internal height of the tank.

8. The separation arrangement according to any one of the preceding claims, **characterised in that** the second chamber (8) is divided into two sections (8a, 8b), a first section (8a) into which the second inlet (11) and the connecting passage (14, 15) open, and a second section (8b) in which the outlet (18) for water separated from fat in the second chamber (8) is arranged, and where a second separating wall (24) is arranged extending upwards from the bottom of the tank to the vicinity of the top of the tank while leaving clear an overflow space next to the top of the tank (1), in order to allow water to flow from the first section (8a) to the second section (8b) over the upper edge of the second separating wall (24), and in this way creating a slurry trap in the first section (8a).

9. The separation arrangement according to claim 8, **characterised in that** a screening wall (25) that extends a certain distance downwards from the top of the tank in order to compel the water that is overflowing to flow downwards in the tank is arranged in the second section (8b) next to the overflow space in the upper part of the tank (1).

## Patentansprüche

1. Eine Abscheidungsanordnung, die in einen Tank (1) mit wenigstens zwei Kammern (7, 8), die hintereinander angeordnet und durch eine Trennwand (6) getrennt sind, integriert ist und die einen ersten Einlass (9) in den Tank für mit Wasser vermischte Lebensmittelabfälle und einen zweiten Einlass (10, 11) in den Tank umfasst, wobei der erste Einlass (9) in eine erste (7) der wenigstens zwei Kammern mündet und wobei eine zweite Kammer (8) mit einem Auslass (18) versehen ist,
**dadurch gekennzeichnet, dass**
der zweite Einlass (10, 11) für Geschirrspülwasser ohne Lebensmittelabfälle in die zweite (8) der wenigstens zwei Kammern mündet, und dass eine Verbindung (12) angeordnet ist, um zu ermöglichen, dass Wasser, das von den Lebensmittelabfällen in der ersten Kammer (7) getrennt ist, weiter in die zweite Kammer (8) fließt und mit Geschirrspülwasser gemischt wird, und dass die zweite Kammer (8) angeordnet ist, um Fett von Wasser zu trennen, und wobei der Auslass (18) für Wasser, das von Fett getrennt wurde, vorgesehen ist.

2. Die Abscheidungsanordnung nach Anspruch 1,
**dadurch gekennzeichnet, dass**
die beiden Einlässe (9, 10) in einer gemeinsamen Stirnwand (2) an einem Ende des Tanks (1) angeordnet sind, und dass der zweite Einlass (10) für Geschirrspülwasser mit einer Leitung (11) verbunden ist, die durch die erste Kammer (7) verläuft und erst in der zweiten Kammer (8) mündet.

3. Die Abscheidungsanordnung nach Anspruch 2,
**dadurch gekennzeichnet, dass**
der erste Einlass (9) im Wesentlichen zentral in einem oberen Teil der ersten Kammer (7) in dem Tank (1) angeordnet ist, und dass innerhalb der ersten Kammer (7) eine Siebanordnung (19) angeordnet ist, die die ankommenden Lebensmittelabfälle und das Wasser im Wesentlichen horizontal nach außen zu den Seiten der Innenfläche des Tanks (1) leitet.

4. Die Abscheidungsanordnung nach einem der vorhergehenden Ansprüche,
**dadurch gekennzeichnet, dass**
der zweite Einlass (10) im Wesentlichen zentral in einem oberen Teil der zweiten Kammer (8) im Tank angeordnet ist und dass innerhalb der zweiten Kammer (8) eine Siebanordnung (16, 17) angeordnet ist, die das einströmende Geschirrspülwasser im Wesentlichen horizontal nach außen zu den Seiten der Innenfläche des Tanks (1) leitet.

5. Die Abscheidungsanordnung nach Anspruch 4,
**dadurch gekennzeichnet, dass**
die Verbindung (12) von der ersten Kammer zur zweiten Kammer einen Verbindungsdurchgang (14, 15) umfasst, der so angeordnet ist, dass er im Wesentlichen zentral im oberen Teil der zweiten Kammer (8) neben dem Einlass (11) für Geschirrspülwasser mündet, und dass die Siebanordnung (16, 17) so angeordnet ist, dass sie das einströmende Geschirrspülwasser und den Strom vom Verbindungsdurchgang im Wesentlichen horizontal nach außen zu den Seiten der Innenfläche des Tanks (1) leitet.

6. Die Abscheidungsanordnung nach Anspruch 5,
**dadurch gekennzeichnet, dass**
der Verbindungsdurchgang (14) seinen Einlass (13) in der ersten Kammer (7) des Tanks im Wesentlichen in der vertikalen Mitte des Tanks (1) angeordnet hat.

7. Die Abscheidungsanordnung nach einem der vorstehenden Ansprüche,
**dadurch gekennzeichnet, dass**
in jeder Kammer (7, 8) eine Dämpfungsplatte (20, 21) sowohl in vertikaler Richtung als auch in Längsrichtung in der betreffenden Kammer (7, 8) mittig angeordnet ist, die nur einen Teil der Innenhöhe des Tanks abdeckt.

8. Die Abscheidungsanordnung nach einem der vorstehenden Ansprüche,
**dadurch gekennzeichnet, dass**
die zweite Kammer (8) in zwei Abschnitte (8a, 8b) unterteilt ist, einen ersten Abschnitt (8a), in den der zweite Einlass (11) und der Verbindungsdurchgang (14, 15) münden, und einen zweiten Abschnitt (8b), in dem der Auslass (18) für das in der zweiten Kammer (8) vom Fett getrennte Wasser angeordnet ist, und wo eine zweite Trennwand (24) angeordnet ist, die sich vom Boden des Tanks nach oben bis in die Nähe der Oberseite des Tanks erstreckt, während ein Überlaufraum neben der Oberseite des Tanks (1) frei gelassen wird, um es Wasser zu ermöglichen, von dem ersten Abschnitt (8a) über den oberen Rand der zweiten Trennwand (24) zu dem zweiten Abschnitt (8b) zu fließen, und auf diese Weise einen Schlammfang in dem ersten Abschnitt (8a) zu schaffen.

9. Die Abscheidungsanordnung nach Anspruch 8,
**dadurch gekennzeichnet, dass**
im zweiten Abschnitt (8b) neben dem Überlaufraum im oberen Teil des Tanks (1) eine Siebwand (25) angeordnet ist, die sich von der Oberseite des Tanks eine gewisse Strecke nach unten erstreckt, um das überlaufende Wasser zu zwingen, im Tank nach unten zu fließen.

## Revendications

1. Agencement de séparation intégré dans un réservoir (1) avec au moins deux chambres (7, 8) positionnées l'une après l'autre et séparées par une paroi de séparation (6), et comprenant une première entrée (9) dans le réservoir pour les déchets alimentaires mélangés avec de l'eau et une seconde entrée (10, 11) dans le réservoir, dans lequel :
la première entrée (9) s'ouvre dans une première (7) des au moins deux chambres et dans laquelle une seconde chambre (8) est prévue avec une sortie (18), **caractérisé en ce que** la seconde entrée (10, 11) pour l'eau de vaisselle sans déchets alimentaires s'ouvre dans la seconde (8) des au moins deux chambres, et **en ce qu'**un raccordement (12) est agencé afin de permettre à l'eau séparée des déchets alimentaires dans la première chambre (7) de s'écouler en avant dans la seconde chambre (8) et être mélangée avec l'eau de vaisselle, et **en ce que** la seconde chambre (8) est agencée pour séparer la graisse de l'eau et dans lequel la sortie (18) est pour l'eau séparée de la graisse.

2. Agencement de séparation selon la revendication 1, **caractérisé en ce que** les deux entrées (9, 10) sont agencées dans une paroi d'extrémité (2) commune au niveau d'une extrémité du réservoir (1) et **en ce que** la seconde entrée (10) pour l'eau de vaisselle est raccordée à un tuyau (11) qui passe par la première chambre (7) et ne s'ouvre pas jusqu'à ce qu'elle soit dans la seconde chambre (8).

3. Agencement de séparation selon la revendication 2, **caractérisé en ce que** la première entrée (9) est agencée de manière essentiellement centrale dans une partie supérieure de la première chambre (7) dans le réservoir (1), et **en ce que** l'on agence, à l'intérieur de la première chambre (7), un agencement de tamis (19) qui guide les déchets alimentaires entrants et l'eau principalement horizontalement vers l'extérieur vers les côtés de la surface interne du réservoir (1).

4. Agencement de séparation selon l'une quelconque des revendications précédentes, **caractérisé en ce que** la seconde entrée (10) est agencée de manière essentiellement centrale dans une partie supérieure de la seconde chambre (8) dans le réservoir et **en ce que** l'on agence, à l'intérieur de la seconde chambre (8), un agencement de tamis (16, 17) qui guide l'eau de vaisselle entrante principalement horizontalement vers l'extérieur vers les côtés de la surface interne du réservoir (1).

5. Agencement de séparation selon la revendication 4, **caractérisé en ce que** le raccordement (12) de la première chambre à la seconde chambre comprend un passage de raccordement (14, 15) agencé pour s'ouvrir de manière essentiellement centrale dans la partie supérieure de la seconde chambre (8) à proximité de l'entrée (11) pour l'eau de lavage, et **en ce que** l'agencement de tamis (16, 17) est agencé pour guider l'eau de vaisselle entrante et l'écoulement du passage de raccordement essentiellement horizontalement vers l'extérieur vers les côtés de la surface interne du réservoir (1).

6. Agencement de séparation selon la revendication 5, **caractérisé en ce que** le passage de raccordement (14) a son entrée (13) dans la première chambre (7) au niveau du réservoir agencé essentiellement dans le centre vertical du réservoir (1).

7. Agencement de séparation selon l'une quelconque des revendications précédentes, **caractérisé en ce qu'**une plaque d'amortissement (20, 21) est agencée dans chaque chambre (7, 8) de manière centrale à la fois dans les directions verticale et longitudinale dans la chambre en question (7, 8) recouvrant uniquement une partie de la hauteur interne du réservoir.

8. Agencement de séparation selon l'une quelconque des revendications précédentes, **caractérisé en ce que** la seconde chambre (8) est divisée en deux sections (8a, 8b), une première section (8a) dans laquelle la seconde entrée (11) et le passage de raccordement (14, 15) s'ouvrent, et une seconde section (8b) dans laquelle est agencée la sortie (18) pour l'eau séparée de la graisse dans la seconde chambre (8), et où une seconde paroi de séparation (24) est agencée en s'étendant vers le haut à partir du fond du réservoir jusqu'à proximité de la partie supérieure du réservoir tout en dégageant un espace de débordement à proximité de la partie supérieure du réservoir (1), afin de permettre à l'eau de s'écouler de la première section (8a) à la seconde section (8b) sur le bord supérieur de la seconde paroi de séparation (24) et de cette manière créer un piège à déchets dans la première section (8a).

9. Agencement de séparation selon la revendication 8, **caractérisé en ce qu'**une paroi de tamis (25) qui s'étend sur une certaine distance vers le bas à partir de la partie supérieure du réservoir afin d'obliger l'eau qui a débordé à s'écouler vers le bas dans le réservoir, est agencée dans la seconde section (8b) à proximité de l'espace de trop-plein dans la partie supérieure du réservoir (1).
